# EUROPEAN PATENT APPLICATION

(11) **EP 3 069 956 A1**
(43) Date of publication of application: **21.09.2016**
(21) Application number: 15382125.1
(22) Date of filing: 18.03.2015
(51) Int. Cl.: B62B 3/02, B65G 41/00, B65G 47/66, B65G 13/12

(54) **Table suitable for transferring baggage between two not necessarily coplanar surfaces**

(71) Applicant: Clece, S.A., 28050 Madrid (ES)
(72) Inventor: Rubio Alfayate, María Ángeles, E-28042 Madrid (ES); Abajo Menguez, Mario, E-28042 Madrid (ES); Milud Chaid, Mustafa, E-28042 Madrid (ES); Roman Hernando, Javier, E-28042 Madrid (ES); Ojeda Fernandez, Manuel, E-28042 Madrid (ES); Herraez Buitrago, José Antonio, E-28042 Madrid (ES)
(74) Representative: ABG Patentes, S.L.

(57) **Abstract**

The present invention relates to a device for easily transferring baggage (12) between two not necessarily coplanar surfaces (13, 14) such as the surfaces between those referred to in the art as baggage outfeed carousels and luggage carts, or between baggage delivery belts and baggage carts. The device has a support structure for a table (11) which allows establishing regulable inclination and height of the table such that said table forms a surface of continuity between two surfaces that are not necessarily coplanar because they are at a different height, or because a surface or both surfaces are inclined or a combination of such conditions, when said table is arranged between both surfaces. The table (11) may incorporate cylinder rollers (9) to make sliding the baggage easier.

## Description

### Object of the Invention

The present invention relates to a device for easily transferring baggage between two not necessarily coplanar surfaces such as the surfaces between those referred to in the art as baggage outfeed carousels and luggage carts, or between baggage delivery belts and baggage carts.

The present invention is characterized by a support structure for a table which allows establishing regulable inclination and height of the table such that said table forms a surface of continuity between two surfaces that are not necessarily coplanar because they are at a different height, or because a surface or both surfaces are inclined or a combination of such conditions, when said table is arranged between both surfaces.

Transfer of baggage between the two not necessarily coplanar surfaces makes moving the baggage between both surfaces easier. The operator does not have to lift the pieces of luggage one by one; rather he/she will only need to let the piece of luggage slide from one surface to another using the table object of the invention as a transition surface.

According to one embodiment, the table incorporates cylinder rollers to make sliding the baggage easier.

### Background of the Invention

Airports have a baggage conveyor system. The baggage conveyor system carries baggage from the check-in points of the airport to the cargo hold of airplanes, and from the cargo hold of airplanes to the baggage claim area. This conveyor system is divided into several areas having different conveyor belts and loading locations. When the baggage goes from one conveyor element to another, for example from the luggage cart to the conveyor belt of the baggage claim area, there is an operator responsible for manually conveying the baggage from one device to another. The main drawback of this manual management is the need to lift heavy loads by hand with the risk of sprains or other injuries on the operator carrying out the transfer. This is due to back twisting movements that the operator performs. Furthermore, baggage may be lost or broken if the baggage drops to the ground or gets caught on a free corner.

Tables having rollers, cylinder rollers as well as conveyor belts for conveying elements, such as those used in an assembly line, for example, are known.

Said rollers and cylinder rollers are used on surfaces over which the baggage slides so that the objects can move between two different points of said surface with friction or effort to the minimum movement. Most of these surfaces have a fixed position and are designed to only work in an indicated position. The problem of these conveying surfaces is that they can only be used in a specific place adapted to the configuration of the environment, therefore in the case of using them in airports a table having rollers with specific dimensions for the elements to be interconnected must be made, this being a very costly and rather inefficient solution since in the case of changing the position of said table for use at a different point, another table must be custom-built for said specific area.

Even in these circumstances, use of these tables for transferring baggage between a first surface, for example a carousel, and a cart would not be possible since the baggage cart is not a fixed structure and is at a different height.

Considering the problems of the state of the art, the object of this invention is a device for interconnecting two not necessarily coplanar surfaces intended for transferring baggage, providing a solution which prevents having to manually convey the objects from one area to another.

### Description of the Invention

The present invention provides a solution to the problems mentioned in the preceding section by means of a table suitable for transferring baggage according to claim 1. The dependent claims define preferred embodiments of the invention.

A first aspect of the invention relates to a *table suitable for transferring baggage between two not necessarily coplanar surfaces comprising:*
- *a support formed by at least a first part and a second part with support elements in any of the parts or in both parts intended for being supported on the ground, wherein the at least a first part and a second part are linked by means of an extensible attachment such that, said support allows variation of the relative separation between the first part and the second part according to a direction of extension X-X' essentially horizontal to the ground,*
- *a support surface intended for serving as a surface with a solution of continuity between at least two conveying elements,*

The support of the table is formed by two parts, the first part and the second part, where both allow a degree of extension in the horizontal direction X-X. In other words, they can be moved away from or closer to one another. As will be seen further below, this extension capacity allows compensating for the variations of length of the projection of the support surface on the support according to X-X' given that the support surface has a constant length and the latter will allow inclined positions giving rise to shortenings according to the horizontal projection. When using relative terms such as horizontal or vertical, it will be understood that these terms will be relative to the ground surface which is the common support surface. The vertical direction corresponds to the direction established by gravitational force.

The table mainly solves two problems:
- conveyance of baggage between a first and second surface that are separated from one another by a slope and
- conveyance of baggage in a scenario similar to the first problem where said first surface, second surface or both can in turn be inclined.

The table solves both problems by providing a surface extending from where a first surface ends to where the second surface starts, making baggage transfer from the first to the second surface easier.

The way in which the table solves the technical problem considered is through:
- *a first structural element comprising two ends, a lower end integral with the first part of the support and the opposing upper end which is linked in an articulated manner by means of a first articulated attachment with a first side of the support surface, and*
- *a second structural element comprising two ends, a lower end integral with the second part of the support and the opposing upper end which is linked in an articulated manner by means of a second articulated attachment with a second side of the support surface opposite the first side,*
*wherein at least one structural element is extensible.*

The first and second articulated attachment allow movement of the support surface changing its inclination such that the inclination is established according to a horizontal axis perpendicular to the direction of extension X-X' going through any of the articulated attachments. At least one of the structural elements is in turn configured to vary its length in a direction substantially perpendicular with respect to the ground. This allows the table to vary the height of at least one of the ends or sides of the support surface, solving the previously mentioned problems.

By raising one of the sides of the surface with respect to the other opposing side, inclination of the support surface is achieved. This inclination shortens the distance between the sides of the support table according to the horizontal projection, i.e., the direction in which it projects and likewise coincides with the horizontal direction X-X'. The shortening or lengthening according to the horizontal direction X-X' is compensated with the separation and shortening capacity between the first part and the second part of the support.

The stability of the table is assured because the extension between the first part and the second part of the support does not require the first structural element and the second structural element to change orientation. According to the preferred embodiment, the first and second structural element are vertical elements and remain vertical at all times regardless of the lengthening or shortening between the first and second part.

According to one embodiment, the support surface is configured so that the baggage slides over said surface with ease. The support surface prevents the operator from having to lift the baggage from one surface to another since letting the baggage slide from one surface to the other by simply sliding said baggage over the table as a result of the transition established between both surfaces is sufficient. The surface can have any shape the user desires according to space requirements. According to one embodiment, the shape of the table is rectangular where the first articulated attachment is on one of the smaller sides of the rectangle and the second articulated attachment is on the opposing smaller side. In this embodiment, the first articulated attachment is formed by two articulated ball and socket joints, each of them located in a different corner of the smaller side of the rectangle; and the second articulated attachment is also formed by two articulated ball and socket joints, each of them located in a different corner of the smaller side of the rectangle corresponding thereto.

All the features and/or steps of methods described in this specification (including the claims, description and drawings) can be combined in any combination, with the exception of those combinations of such features that are mutually exclusive.

### Description of the Drawings

These and other features and advantages of the invention will be better understood from the following detailed description of a preferred embodiment, given only by way of illustrative and non-limiting example in reference to the attached drawings.
Figure 1 shows an embodiment of the table according to the present invention by means of a schematic depiction in perspective view.
Figure 2 shows an elevational view of one embodiment of the first structural element of the table according to the present invention.
Figure 3 shows an elevational view of one embodiment of the second structural element according to the present invention.
Figure 4 shows one embodiment of an articulated attachment between a structural element and a support surface according to the present invention.
Figure 5 shows a perspective view of another embodiment of the table according to the present invention.
Figure 6 shows one embodiment of the table according to the present invention according to a schematic depiction in different configurable positions showing the relation between the different extensible and articulable elements.

### Detailed Description of the Invention

According to the first aspect of the invention, the present invention relates to a table suitable for transferring baggage between two not necessarily coplanar surfaces. The device of this invention is configured to allow conveying baggage between a first conveyor element and second conveyor element, for example between elements such as carousels, luggage carts, baggage delivery belts or baggage carts. The first conveyor element and the second conveyor element can be at the same height with respect to the ground, or at a different height with respect to the ground.

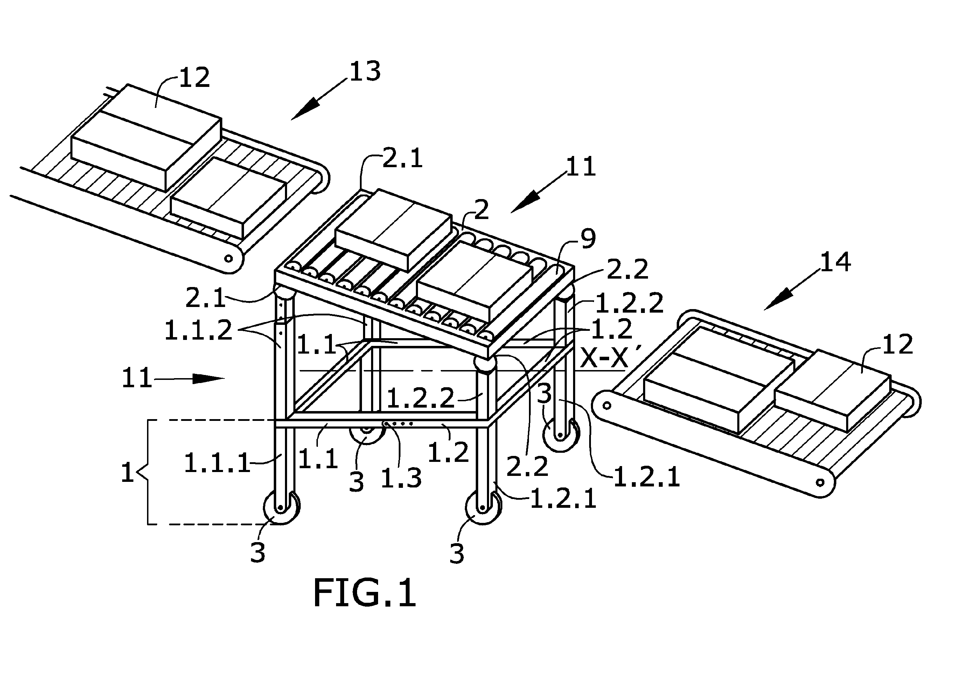

Figure 1 shows a general embodiment of the table (11). The table (11) is configured to transfer the baggage (12) with a solution of continuity between at least two not necessarily coplanar conveyor elements (13, 14) with a slope between one another, where this table (11) comprises a support (1) formed by at least a first part (1.1) and a second part (1.2) with support elements (1.1.1, 1.2.1) in any of the parts (1.1, 1.2) or in both parts intended for being supported on the ground, wherein the at least a first part (1.1) and a second part (1.2) are linked by means of an extensible attachment (1.3) such that, said support (1) allows variation of the relative separation between the first part (1.1) and the second part (1.2) according to a direction of extension X-X' essentially horizontal to the ground.

In Figure 1, the support (1) according to this embodiment is identified by means of a brace that rises from the ground to a specific height wherein a horizontal rectangular frame formed by bar elements is shown. This rectangular frame has the extensible attachment (1.3) located in the central parts of the largest bars, i.e., the longest bars.

The first part is thereby formed by half rectangular frame with its support elements (1.1.1) configured by way of legs; and the second part is formed by the other half rectangular frame with its support elements (1.2.1) also configured by way of legs.

The extensible attachment (1.3) according to this embodiment is configured with telescopic attachment formed by the bar elements converging in said extensible attachment (1.3); in other words, the bar of the part of the horizontal frame corresponding to one of the parts (1.1) enters the bar of the other part (1.2) of the horizontal frame, there being a link which allows fixing the degree a bar enters the other.

The configuration of the horizontal frame means that the bars configuring the extensible attachment (1.3) on both sides of the frame enter or come out the same distance; the first part (1.1) and the second part (1.2) of the support (1) thereby always move away from or closer to one another according to the horizontal direction X-X' coinciding with the direction wherein the largest sides of the horizontal frame extend.

Given that the support elements (1.1.1, 1.2.1) maintain their length, relative separation or approximation between the first part (1.1) and the second part (1.2) assure that the horizontal frame remains horizontal.

The same drawing shows a support surface (2) intended for serving as a surface with a solution of continuity between at least two conveying elements (13, 14). It is the surface intended for sliding of the baggage (12) serving as a continuity between both conveyor elements (13, 14).

In this embodiment demarcated in the upper portion by means of the described horizontal rectangular frame, there is arranged on the support (1) a first structural element (1.1.2) comprising two ends, a lower end integral with the first part (1.1) of the support (1) and the opposing upper end which is linked in an articulated manner by means of a first articulated attachment (2.1) with a first side of the support surface (2), and a second structural element (1.2.2) comprising two ends, a lower end integral with the second part (1.2) of the support (1) and the opposing upper end which is linked in an articulated manner by means of a second articulated attachment (2.2) with a second side of the support surface (2) opposite the first side.

The first structural element (1.1.2) is the two bar elements extending vertically from each corner of the first part (1.1) of the support (1), the two bar elements located on the left. The second structural element (1.2.2) is the two bar elements extending vertically from each corner of the second part (1.2) of the support (1), the two bar elements located on the right.

It is verified that at least one structural element (1.1.2, 1.2.2) is extensible providing inclination capacity to the support of the support surface (2).

The embodiment of Figure 1 thereby shows a support (1) formed only by bar elements, in which the support elements (1.1.1, 1.2.1) in the form of legs, for example, extend in the lower portion from the ground to the horizontal frame in each of the corners establishing support on the ground.

The lower end of each support element (1.1.1, 1.2.1) can vary according to the configurations most suitable for the user as will be shown further below. Figure 1 shows that each lower end of the support elements (1.1.1, 1.2.1) comprises a wheel (3), where said wheels (3) are adapted to move the table (11), reducing the effort involved in moving the table (11) from one place to another.

The support surface (2) shown in Figure 1 comprises several cylinder rollers (9) adapted to rotate about their axis when the baggage (12) passes over their surface. These cylinder rollers (9) facilitate reducing the effort and time the baggage requires to move over the support surface (2) from the first conveyor element (13) to the second conveyor element (14). Other types of configurations available for said support surface (2) will be shown further below.

Figure 1 shows a first extensible structural element (1.1.2). Said first structural element (1.1.2) is configured to reach a specific height which allows providing a solution of continuity between the first conveyor element (13) and the first part of the support surface (2), such that it communicates the first conveyor element (13) with the support surface (2), regardless of whether or not the first conveyor element (13) has an inclination, being adjusted to the height of said first conveyor element (13). Since the first structural element (1.1.2) is extensible, said element (1.1.2) is configured to vary its length, such that it can provide a solution of continuity to conveyor belts with different height by means of varying the length of said first structural element (1.1.2).

As indicated above, this first structural element (1.1.2) is formed by the two bar elements located on the left of the drawing and extending from the first part (1.1) of the horizontal lower frame of the support (1), with which it is integral, to the support surface (2).

The upper end of each bar of the structural element (1.1.2) is linked in an articulated manner by means of a first articulated attachment (2.1) with the first side of the support surface (2). This first articulated attachment (2.1) allows at least the inclination of the table with respect to an axis passing through the ends of the two bars configuring the first structural element (1.1.2). In this particular case, the axis of rotation is an axis of rotation parallel to the smaller side of the rectangular support surface (2) and perpendicular to the horizontal direction X-X'.

Figure 1 shows that the second structural element (1.2.2) is not extensible. Said second structural element (1.2.2) reaches a predetermined height adapted to allow a solution of continuity between the second conveyor element (14) and the second part (1.2) of the support surface (2). In this case, the table (11) can only provide a solution of continuity at a specific height, since the second structural element (1.2.2) is not extensible.

Figure 1 shows one embodiment in which the first structural element (1.1.2) is extensible and the second structural element (1.2.2) is not extensible, nevertheless, according to other embodiments both structural elements (1.1.2, 1.2.2) are extensible.

In the case of Figure 1, the table (11) is configured to transfer baggage (12) from a first baggage conveyor element (13), for example a baggage conveyor belt, to a second baggage conveyor element (14), for example a baggage cart, in which the first baggage conveyor element (13) is at a greater height with respect to the ground than the second baggage conveyor element (14).

Figure 1 shows a general embodiment of the table (11) according to the invention. Embodiments distinguishing each part of the table (11) are shown below.

### The support (1) and its support elements (1.1.1, 1.2.1)

The support (1) is a structure bearing the support surface (2) assuring stability and capacity to keep said support surface (2) in a specific position and orientation.

It has in its lower part support elements (1.1.1, 1.2.1) assuring load transmission to the ground; and the upper part has structural elements (1.1.2, 1.2.2) extending to the support surface (2).

The extensible attachment (1.3) of the support (1) compensates for the shortening or lengthening of the length of the vertical projection of the support surface (2) such that, the position of the support elements (1.1.1, 1.2.1) is modified in direction X-X' as a result of the extensible attachment (1.3) of the support (1) adjusting the position thereof according to the vertical projection of the corresponding end of the support surface (2). Said positions in direction X-X' depend on the height at which the structural elements (1.1.2, 1.2.2) are located.

As indicated, in the embodiments shown in the drawings, the table has a rectangular configuration such that the support (1) has a structural element (1.1.2, 1.2.2) in each of the corners of the support surface (2). Therefore in one embodiment, the configuration of the support (1) with support elements (1.1.1, 1.2.1) is a rectangular base, base being understood as projection over a plane that is horizontal or parallel to the ground.

This configuration may be different, for example with a triangular support surface (2) wherein there are at one end two bars corresponding to the first structural element (1.1.2) extending to two of the corners of the triangular support surface (2); and there is at the opposite end a bar corresponding to the second structural element (1.2.2) extending to the corner of the remaining support surface (2). Following the triangular configuration, direction X-X' would be from the central part of the horizontal projection of the two corners which are at one end, those corresponding to the first structural element (1.1.2), to the corner which is at the other end, that corresponding to the second structural element (1.2.2). The two bars of the first structural element (1.1.2) are attached to the first part (1.1) of the support (1) and the third bar of the second structural element (1.2.2) is attached to the second part (1.2) of the support (1).

After describing in detail this different embodiment with a triangular support surface (2) to show that the shape of both the support (1) and the support surface (2) can be adjusted to user needs, description based on drawings where the support surface (2) is rectangular follows.

In this case, it has been described that the support (1) comprises four support elements (1.1.1, 1.2.1) located in the corners of the support (1) having a rectangular base configuration, as shown in Figure 1. Said support elements (1.1.1, 1.2.1) are intended for supporting the support (1) on the ground. The support elements (1.1.1, 1.2.1) can comprise several elements.

In one embodiment, each support element (1.1.1, 1.2.1) comprises a block made of non-slip rubber, in which said block is adapted to prevent the table (11) from sliding on the ground.

According to one embodiment, the support elements (1.1.1, 1.2.1) of the support (1) have wheels (3) such that it is possible to move the table (11) from one location to another.

In another embodiment, each wheel (3) comprises a braking system. The braking system is configured to fix the position of the wheels (3) such that the table (11) is fixed in a specific position, regardless if there is a piece of baggage on the support surface (2) or said support surface (2) is free.

In a particular embodiment, the braking system comprises a manual brake configured to be located in:
- a first position in which the brake is in contact with the wheel (3), or
- a second position in which the wheel (3) rotates freely about its axis.

The attachment between the support elements (1.1.1, 1.2.1) and the first part (1.1) and the second part (1.2) of the support (1) can have several forms. In one embodiment, the support (1) is configured by means of bar elements, in this case the first part (1.1) of the support (1) and the support elements (1.1.1) form a bar-type mono-structure and likewise the second part (1.2) and the support elements (1.2.1) also form another bar-type mono-structure, mono-structure being understood as a rigid structure formed by a single body.

In another embodiment, the support elements (1.1.1, 1.2.1) are welded to each part (1.1, 1.2) of the support. To improve stability, in one embodiment the table (11) additionally comprises reinforcement brackets in the attachment between the support (1) and its support elements (1.1.1, 1.2.1). The reinforcement brackets are configured to assure structural stability in the attachments between the different bar elements forming the first part (1.1) and second part (1.2) of the support (1), particularly the attachments with the respective support elements (1.1.1, 1.2.1) thereof.

### Support surface (2)

The support surface (2) is configured to allow easy sliding of the baggage (12) such that the baggage (12) is moved from a first end of the support surface (2) to a second end of the support surface (2). The capacity to modify the height between one side and another (or one end and another), arranged opposing one another, means that movement of the baggage (12) is established between these opposing ends since they connect the surfaces at different heights.

According to user needs elements can be added to make said movement easier. In a particular embodiment, the support surface (2) additionally comprises either a plurality of cylinder rollers (9) or balls to allow easy sliding of the baggage (12). Advantageously, such bearings make moving the baggage from one end of the support surface (2) to the other easier, allowing automation of the communication process between a first baggage conveyor element (13) and a second baggage conveyor element (14), as shown in Figure 1.

Regardless of the configuration of the support (1), the configuration of the support surface (2) can be the same as the configuration of the support (1) or can be different. In this particular embodiment, the configuration of the support surface (2) is rectangular in both (1, 2), as shown in Figure 1.

### Structural elements (1.1.2, 1.2.2)

The structural elements (1.1.2, 1.2.2) are elements connecting the support (1) with the support surface (2) as shown in Figure 1. In a particular embodiment, the structural elements (1.1.2, 1.2.2) link each corner of the support (1) with each corner of the support surface (2).

In a particular embodiment, the structural elements (1.1.2, 1.2.2) comprise bar elements. The bar elements are configured to support the weight of the table (11) and the baggage (12) sliding or lying on the support surface (2).

Furthermore, the structural elements (1.1.2, 1.2.2) are configured to vary its length to move the outlet of a first baggage conveyor element (13) closer to one of the ends of the support surface (2) and to move the other end of the support surface (2) closer to a second baggage conveyor element (14), in which the first baggage conveyor element (13) is at a height different from the second baggage conveyor element (14) with respect to the ground.

According to another embodiment, the structural elements (1.1.2, 1.2.2) are configured telescopically or in an extensible manner. In a particular embodiment, the at least one extensible structural element (1.1.2, 1.2.2) comprises extensible attachments and in which said extensible attachments:
- are configured by means of two coaxially arranged bars (6, 7), one being housed inside another,
- the two bars can slide with respect to one another; and,
- have fixing means (8) for mutual retention in a specific position.

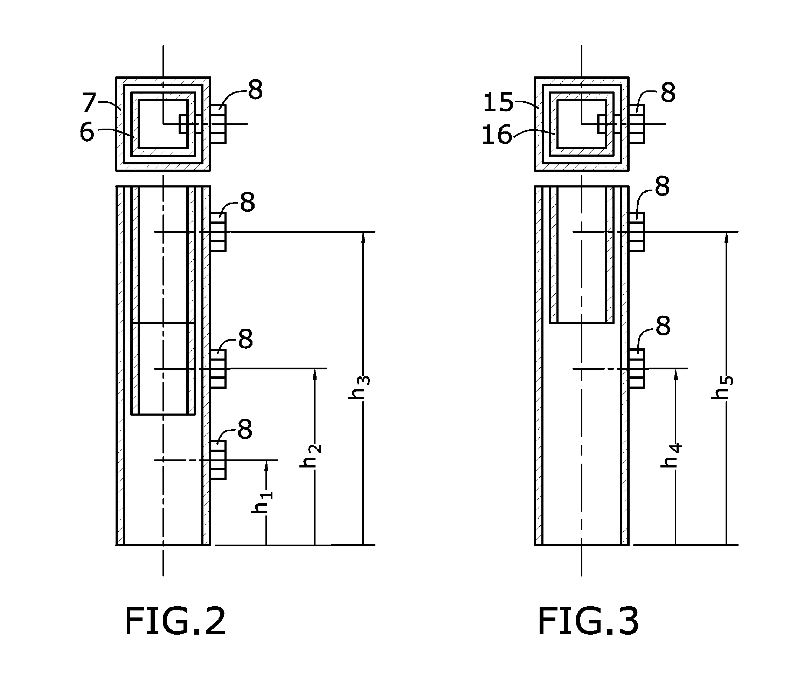

Figure 2 shows an embodiment of the first extensible structural element (1.1.2) of the table (11) according to the present invention. The first structural element (1.1.2) comprises two coaxially arranged bars (6, 7), i.e., two bars arranged coaxially with respect to one another. The inner bar (6) is housed in the outer bar (7). The inner bar (6) is configured to allow a first articulated attachment (2.1) in its upper end, said upper end of the inner bar (6) being the opposing upper end of the first structural element (1.1.2). Said inner bar (6) is also configured to allow fixing thereof to the outer bar (7) through fixing means (8). The lower end of the inner bar (6) is free of any attachment or fixing.

The outer bar (7) is configured for being fixed to the support (1) of the table (11) at the lower end thereof, said lower end of the outer bar (7) being the lower end integral with the first part (1.1) of the support (1). The upper end of the outer bar (7) is free of any attachment or fixing.

The inner bar (6) and outer bar (7) comprise at least one hole. Said at least one hole is configured to house a fixing means (8). In a particular embodiment, said fixing means (8) is a bolt and said bolt is configured to be introduced through the holes of each bar (6, 7) such that as it goes through both bars (6, 7) the relative position of said bars (6, 7) is fixed. The bolt (8) is configured to support the weight transmitted through the structural element configured by both bars, the weight transmitted thereto by the support surface (2) due to its weight and the weight of the baggage (12) moving from one end of said support surface (2) to another.

Therefore, the user establishes the length of the first structural element (1.1.2) through the bolt. The first structural element (1.1.2) can reach different heights h₁, h₂ or h₃ with respect to the ground, where h₁ < h₂ < h₃, depending on which hole houses the bolt (8).

Figure 3 shows one embodiment of the second extensible structural element (1.2.2) of the table (11) according to the present invention equivalent to the structure shown in Figure 2 where there are now two possible relative positions between the inner bar (16) and the outer bar (15) since only two perforations or holes are shown also giving rise to two possible heights h₄ or h₅ with respect to the ground, where h₄ < h₅.

In other particular embodiments, the extensible attachments have mutual retaining means (8), such as complementary teeth or tabs for example, to establish a length of extension.

### Articulated attachment

The first and second articulated attachments (2.1, 2.2) are configured to allow rotation of the support surface (2) with a degree of freedom, this degree of freedom being a rotation with respect to a horizontal axis perpendicular to the horizontal direction X-X' giving rise to an angle between one of the structural elements (1.1.2, 1.2.2) and the support surface (2), respectively.

In a particular embodiment, the first articulated attachment (2.1), the second articulated attachment (2.2) or both comprise the combination of two spherical ball and socket joint articulated attachments at two points of the same side of the support surface (2) giving rise to a first hinged link with the axis of rotation horizontal to the ground and transverse to the direction of extension X-X'.

These two hinged axes allow defining an inclined plane parallel to both hinged axes. Since there are four articulated points in a spherical ball and socket joint configuration, it is possible to define other axes of rotation. Particularly, the first articulated attachment (2.1) and the second articulated attachment (2.2) may give rise to a second hinged link with the axis of rotation horizontal to the ground and parallel to the direction of extension X-X' at least for small angles.

Therefore, according to the embodiments of greatest interest, depending on user needs, the hinged links will be located in the first structural element (1.1.2), in the second structural element (1.2.2) or in both.

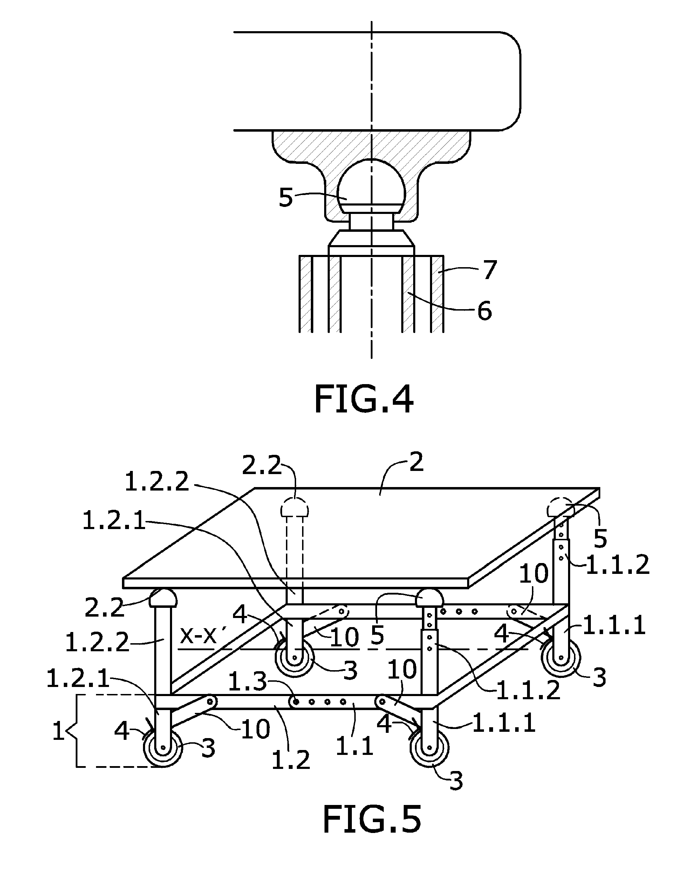

For example, Figure 4 shows an embodiment of the articulated attachment between a structural element (1.1.2, 1.2.2) and the support surface (2). This articulated attachment consists of a spherical cap integral with the inner bar (6) which is embedded in an antagonist housing integral with the support surface (2). This configuration allows establishing from the kinematic point of view a link in the form of a spherical ball and socket joint (5) assuring rotation around any axis going through the center of the spherical cap. Ball and socket joints can be used in any of the articulated attachments (2.1), and particularly in one embodiment, the hinged link between the support surface (2) and the first structural element (1.1.2) or the hinged link between the support surface (2) and the second structural element (1.2.2) is by means of ball and socket joints (5).

Figure 5 shows one embodiment of a table (11) suitable for transferring baggage between two not necessarily coplanar surfaces. In this case, the table comprises the following elements:
- The configuration of the support (1) is rectangular and by means of bar elements.
- The support elements (1.1.1, 1.2.1) are rectangular bars, said bars are located in each vertex of the support (1), and therefore the support (1) comprises four rectangular bars located in each vertex of the support (1). Furthermore, each of the four support elements (1.1.1, 1.2.1) comprises a wheel (3) and each wheel (3) in turn comprises a braking system (4) for braking by friction of a rubber or plastic brake shoe.
- The attachment between the four support elements (1.1.1, 1.2.1) and the support additionally comprises a reinforcement bracket (10) in each attachment.
- The first structural element (1.1.2) is extensible.
- The first articulated attachment (2.1) comprises two articulated attachments at two points of the same side of the support surface (2) by means of ball and socket joints (5).
- The support surface (2) is rectangular.

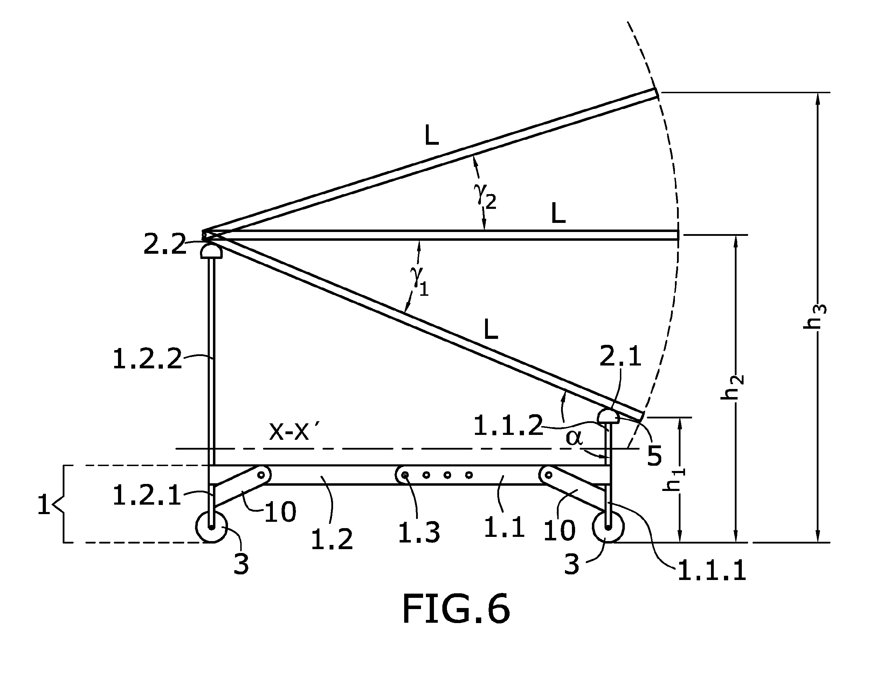

Figure 6 shows an embodiment of the movements of the table (11) such as that shown in Figure 5. Unlike the table (11) shown in Figure 1, the table (11) of Figure 5 has the first part (1.1) of the support (1) on the right and the second part (1.2) of the support (1) located on the left.

This case shows how the support between the support surface (2) and the first structural element (1.1.2) reaches different heights h₁, h₂ or h₃ with respect to the ground, in this particular example, h₁=550mm, h₂= 850mm and h₃=1180mm, while the height of the second structural element (1.2.2) with respect to the ground does not change. In another embodiment, both structural elements (1.1.2, 1.2.2) are extensible which allows adjusting the height at both ends according to direction X-X', an end through which baggage (12) is received at a specific height and the other end through which baggage (12) moves out at another height, thereby being adapted to the two surfaces between which the table is located.

Following the same example where only one of the structural elements (1.1.2) is regulable in height, in the case of height h₁, the table (11) is configured to receive the baggage (12) from an outfeed belt which is at a height greater than the infeed belt and due to the action or help of gravity, the baggage (12) would slide from one end of the support surface (2) to the other. In one embodiment, the support surface (2) of the table (11) comprises several cylinder rollers (9) or balls to allow easy sliding of the baggage (12).

In the case of height h₂, the table (11) is configured to receiving the baggage (12) from an outfeed belt which is at the same height as the infeed belt. As a result of the movement of the outfeed belt and of the action of the cylinder rollers (9), the baggage would slide from one end of the support surface (2) to the other.

In the case of height h₃, the table (11) is configured to receive the baggage from an outfeed belt which is at a height less than the infeed belt. In this case, the support surface (2) additionally comprises a motorized conveyor belt from a first end to a second end of the support surface (2) configured to slide or drive the baggage (12) or both from a first end to a second end of the support surface (2).

In another embodiment, the second structural element (1.2.2) is extensible and can reach different heights h₄, or h₅ in the contact thereof with the support surface (2), with respect to the ground: h₄=400mm and h₅=700mm, while the height of the first structural element (1.1.2) does not change with respect to the ground. The result is a set of three possible inclinations of the support surface (2) locating the second end or side of the support surface (2) at different heights.

## Claims

1. A table (11) suitable for transferring baggage (12) between two not necessarily coplanar surfaces comprising:
- a support (1) formed by at least a first part (1.1) and a second part (1.2) with support elements (1.1.1, 1.2.1) in any of the parts (1.1, 1.2) or in both parts intended for being supported on the ground, wherein the at least a first part (1.1) and a second part (1.2) are linked by means of an extensible attachment (1.3) such that, said support (1) allows variation of the relative separation between the first part (1.1) and the second part (1.2) according to a direction of extension X-X' essentially horizontal to the ground,
- a support surface (2) intended for serving as a surface with a solution of continuity between at least two conveying elements,
- a first structural element (1.1.2) comprising two ends, a lower end integral with the first part (1.1) of the support (1) and the opposing upper end which is linked in an articulated manner by means of a first articulated attachment (2.1) with a first side of the support surface (2), and
- a second structural element (1.2.2) comprising two ends, a lower end integral with the second part (1.2) of the support (1) and the opposing upper end which is linked in an articulated manner by means of a second articulated attachment (2.2) with a second side of the support surface (2) opposite the first side,
wherein at least one structural element (1.1.2, 1.2.2) is extensible.

2. The table (11) according to claim 1, wherein the structural elements (1.1.2, 1.2.2) comprise bar elements.

3. The table (11) according to any of the preceding claims, wherein the first articulated attachment (2.1) comprises two articulated attachments at two points of the same side of the support surface (2) giving rise to a first hinged link with the axis of rotation horizontal to the ground and perpendicular to the horizontal direction of extension X-X'.

4. The table (11) according to any of the preceding claims, wherein the second articulated attachment (2.2) comprises two articulated attachments at two points of the same side of the support surface (2) giving rise to a second hinged link with the axis of rotation horizontal to the ground and perpendicular to the horizontal direction of extension X-X'.

5. The table (11) according to any of claims 3 or 4, where the hinged link between the support surface (2) and the first structural element (1.1.2) or the hinged link between the support surface (2) and the second structural element (1.2.2) is by means of ball and socket joints (5).

6. The table (11) according to any of the preceding claims, wherein the configuration of the support (1) with support elements (1.1.1, 1.2.1) is rectangular.

7. The table (11) according to any of the preceding claims, wherein the configuration of the support surface (2) is rectangular.

8. The table (11) according to claims 6 and 7, wherein the structural elements (1.1.2, 1.2.2) link each corner of the support (1) with each corner of the support surface (2).

9. The table (11) according to any of the preceding claims, wherein the structural elements (1.1.2, 1.2.2), the support (1) or both are configured by means of bar elements.

10. The table (11) according to any of the preceding claims, wherein the at least one extensible structural element (1.1.2, 1.2.2) comprises extensible attachments, and wherein said extensible attachments:
- are configured by means of two coaxially arranged bars (6, 7), one being housed inside another,
- the two bars can slide with respect to one another; and,
- have fixing means (8) for mutual retention in a specific position.

11. The table (11) according to any of the preceding claims, wherein the extensible attachments (1.3) have mutual retaining means to establish a pre-established length of extension.

12. The table (11) according to any of the preceding claims, wherein the support surface (2) additionally comprises either a plurality of cylinder rollers (9) or balls to allow easy sliding of the baggage (12).

13. The table (11) according to any of the preceding claims, additionally comprising reinforcement brackets (10) in the attachment between the support (1) and its support elements (1.1.1, 1.2.1).

14. The table (11) according to any of the preceding claims, wherein the support elements (1.1.1, 1.2.1) of the support (1) have wheels (3).

15. The table (11) according to claim 14, wherein each wheel (3) comprises a braking system (4).
